# EUROPEAN PATENT SPECIFICATION

(11) **EP 0 605 101 B1**
(45) Date of publication and mention of the grant of the patent: **14.01.1998**
(21) Application number: 93309328.8
(22) Date of filing: 23.11.1993
(51) Int. Cl.: H01H 35/14, G01P 15/135

(54) **Acceleration switch**
Beschleunigungsschalter
Interrupteur d'accélération

(30) Priority: 27.11.1992 GB 9224862; 20.05.1993 GB 9310447
(43) Date of publication of application: 06.07.1994
(73) Proprietor: ALLIEDSIGNAL LIMITED, Kingswood, Bristol BS15 2NL (GB)
(72) Inventor: Gordon, Ian Alexander, Carlisle, Cumbria CA2 5PE (GB); Evans, Raymond George, Croft, Warrington, cheshire WA3 7LE (GB)
(74) Representative: W.P. THOMPSON & CO.

(56) References cited:
- DE-A- 2 113 117
- DE-A- 2 123 361
- FR-A- 2 026 346
- FR-A- 2 188 167
- FR-A- 2 296 257

## Description

This invention relates to rate of speed-change sensing devices and relates especially to such devices for sensing vehicle deceleration for activating passenger safety restraint pretensioning devices.

In a vehicle safety restraint system it is usual to provide a seat occupant with a seat belt comprising a lap portion of webbing passing from an anchorage point across the lap of the occupant to a buckle tongue and thereafter from the buckle tongue diagonally across the torso of the occupant and via a shoulder height D-ring to an emergency locking retractor. Such a retractor locks in response to webbing sensing and/or vehicle sensing corresponding to abnormal rate of change of vehicle speed. A modern seat belt retractor is a low friction mechanism requiring only a light rewind spring. This contributes to optimum comfort for the occupant but means that the seat belt webbing may rest only lightly against the body of the occupant. In order to minimise forward movement of an occupant following lock-up of the retractor, it has increasingly become the practice to provide vehicle sensitive means to cause pretensioning of the belt webbing at the onset of a crash condition. Such pretensioning can be effected for example by means operating on the retractor or alternatively by means operating to shorten the buckle anchorage.

Pretensioners can be mechanical devices in which a compressed spring is permitted to apply pretensioning force or alternatively a pretensioner may contain a piston movable in a cylinder under the influence of expanding gas.

Typically, expanding gas is generated by a pyrotechnic device which may be energised by a mechanical or electrical detonating device. Mechanical detonating devices can be provided with a normally captive firing member which is releasable to strike a detonating element when predetermined vehicle deceleration conditions are attained. Alternatively the pyrotechnic device may be activated by an electrical connection from the main battery of the vehicle in response to an electrical sensing device to complete the circuit.

There is known from DE 2 113 117, a sensing arrangement comprising an inertial mass, spring loaded to keep a micro-switch plunger depressed, and which releases the plunger to activate a vehicle safety device when deceleration of a given magnitude resulting from a collision, causes the mass to move translationally away from the plunger.

There is also known from FR 2188167 a sensing arrangement in which the inertial mass carries with it a cam surface which is effective to press the plunger of a switch in response to a predetermined rate of change of speed.

The present invention seeks to provide an improved sensing means capable of providing an electrical signal with predictable tolerancing of the rate of change value and ease of manufacture.

According to the present invention, there is provided a rate of speed change sensing device comprising a housing within which an inertial mass is movable against the force of a calibration spring movement of said mass being effective to release a normally depressed plunger of a micro-switch when a predetermined rate of change of speed is sustained, characterised in that said mass is movably located in a guide channel within the housing and said mass carries 5 with it a cam surface which normally holds the plunger of the micro-switch depressed, the movement of said mass against the calibration spring in response to said predetermined rate of change of speed moving said cam surface transversely relative to said plunger.

A micro-switch is advantageous because usually in the depressed condition the force exerted by the actuating plunger or lever is relatively small in the depressed state relative to the force exerted in the undepressed state. Accordingly, a predictable tolerance of the complete sensing device is readily able to set quite narrowly by selecting of the calibration spring alone.

In order that the invention may be more clearly understood and readily carried into effect the same will now be further described by way of an example with reference to the accompanying drawings of which:
Fig. 1 illustrates two sectional diagrammatical views of a rate of a prior art speed change sensor mounted within a tube;
Fig. 2 illustrates a part cut-away view of an embodiment of a rate of speed change sensor according to the invention.
Fig 3, illustrates an adaptation of a rate of speed change sensor illustrated in Fig. 2
Fig. 4, illustrates a modification of Figs. 2 and 3.
Fig. 5, illustrates a seat-belt webbing retractor including a pretensioner with a rate of speed change sensor and
Figs. 6 and 7, illustrate rate of speed change sensors with integral power source.

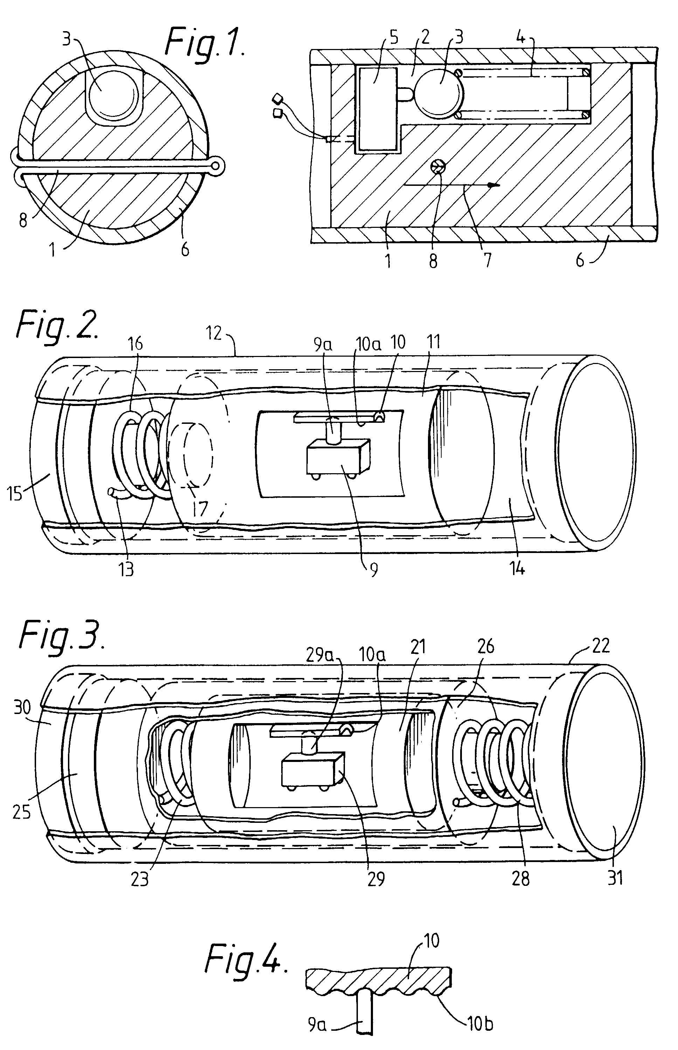

Referring to Fig. 1 of the drawing the rate of speed change sensing device comprises a generally cylindrical moulded plastic body 1 having a channel 2 dimensioned to loosely receive an inertial mass comprising a steel sphere 3. At one side of the sphere 3 the plastic moulding receives an electrical micro-switch 5, positioned such that the sphere can rest against the micro-switch plunger. At the other side of the sphere 3, there is located a calibration spring 4 under compression between the plastics moulding and the sphere. The calibration spring 4 is chosen to on the one hand exert sufficient force on the sphere to normally maintain the micro-switch plunger depressed and on the other hand to be deflectable by the inertial force of the sphere when a predetermined deceleration occurs in a body carrying the sensor in the direction of the arrow 7.

Deflection of the spring 4 thereby results in the completion of an electrical circuit through the micro-switch.

The sensor is assembled by inserting the micro-switch 5, the spring 4 and the inertial mass 3 into the channel 2 and then sliding the assembly into an outer tube 6 to be located therein by a through-pin 8.

The sensor described above may be assembled into a tube of a pyrotechnic or other type of pretensioner device and electrically wired such that on completion of an electric circuit through the micro-switch, the pre-tensioner actuator is operated. In the case of a pyrotechnic device this is achieved by electrical detonation but in the case of a mechanical device an electrical solenoid may actuate a spring release catch to initiate a percussive detonation.

A further embodiment of the present invention is shown in Fig 2. In this embodiment the micro-switch 9 is held in the depressed position by a cam 10. The cam 10 is part of an inertial mass 11. In this embodiment the inertial mass 11 surrounds the micro-switch 9. In the event of acceleration above a pre-determined level the inertial mass 11 moves in tube 12 against the load of a calibration compression spring 13.

The slideable inertial mass 11 is retained between the compression spring 13 and an end stop 14 axially fixedly positioned in the tube, the spring itself being under compression between the mass 11 and a further end stop and being located in position by suitable respective cylindrical projections 16 and 17. The surface 10a of cam 11 is U-shaped to maintain alignment with the plunger 9a of the micro-switch and the latter being mounted on a side-plate covering an aperture (not shown) on the tube 12. After travelling a pre-determined distance in the direction of the arrow the inertial mass 11 releases the normally depressed plunger 9a of the micro-switch 9. This completes an electric circuit through the micro-switch and the pre-tensioner device is detonated.

One advantage of the embodiment of Fig 2 is that for a given overall envelope, a much larger inertial mass can be used than in Fig 1. This feature allows a larger calibration spring to be used, thus reducing the percentage variation in the release threshold due to component variations.

Although the cam 10 is integral with the inertial mass 11, it may be a separate component attached thereto. In the second case a standard mass may be used together with a cam selected from a standard collection of alternative cam shapes. The mass and the cam may also be made of different materials. A steel mass may be used to provide a large mass within a small space together with a plastic cam to provide a low friction surface to slide against the micro-switch plunger.

In certain applications it may be desirable for the same sensing device to be sensitive to predetermined and possibly different rates of deceleration due (say) to fronted impacts and acceleration due (say) to rear impacts. Of course it may be possible to employ two sensing devices such as described above, mounted side by side, however in an improvement or modification such as illustrated in Fig. 3 the sensing device of Fig. 2 may be modified to accommodate the movable inertial mass 21 and the calibration spring 23 in an inner capsule 26 which is itself slideable in an opposite direction within the outer tube 22 against the opposing force of a further calibration spring 28. The micro-switch 29 is now mounted on a side plate covering an aperture (not shown) of the outer tube 22 and projecting through an open window in the side of the capsule 26 to cooperate with the inertial mass 21 as before. End-caps 30 and 31 serve to contain the capsule 26 within the outer tube with calibration spring 28 under suitable compression.

In operation the calibration spring 23 will determine the predetermined deceleration in one direction and spring 28 will determine a predetermined deceleration in the opposite direction at which the micro-switch is activated to make its contacts and detonate a pyrotechnical device.

In a modification of the sensing device of Fig. 1, Fig. 2 or Fig. 3, the inertial mass may be designed to accommodate an electric battery which is connectable to output leads (not shown) to a pyrotechnic or other device to be activated via the micro-switch. In such a case the mass of the electric battery makes up some of the inertial mass.

In a further modification of the device of Fig 2 or Fig. 3, the surface 9a of the cam of Fig 2 engaging the micro-switch plunger may have an undulating or periodic shape as shown in Fig 4. During movement the micro-switch therefore cycles between on and off states. This allows for the possibility of an additional electronic circuit to count the number or rate of switching operations to effect discrimination between (crashes and "no-fire") incidents which are required to operate a pre-tensioner and incidents such as impulsive vehicle seat adjustments which are not required to operate a pre-tensioner.

Whilst the sensing devices described in the foregoing are housed in cylindrical tubes, in each case they may be arranged in a rectangular section housing. In the case of the device of Fig 2 or Fig. 3, this may be designed with a generally rectangular inertial mass surrounding the micro-switch, the mass being slideably guided in the rectangular housing.

In the examples of the invention described in the foregoing the sensing mechanism is of a form more suited to use in buckle pretensioners but the same concepts can be used for pretensioners provided on webbing retractors.

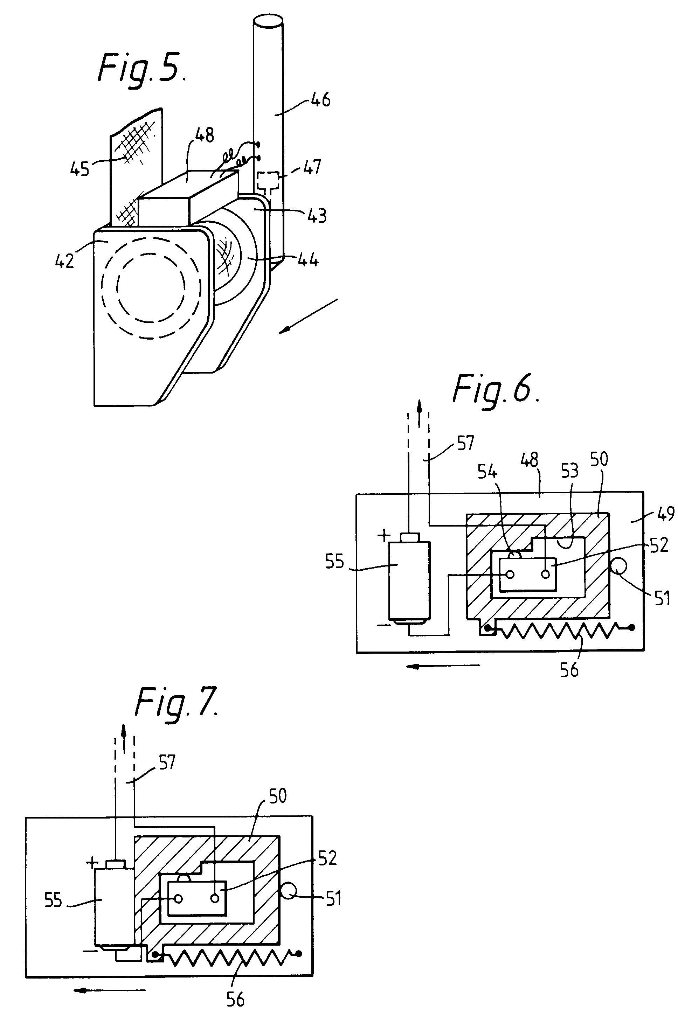

Referring to Fig. 5, a seat belt webbing retractor comprises a frame 41 for mounting to the chassis of a vehicle adjacent a respective passenger seat, the frame has parts 42 and 43 between which a webbing reel 4 is mounted for rotation. The side 42 incorporates a vehicle and webbing sensing mechanism of known form operable to lock the reel against webbing withdrawal in the event of a predetermined respective webbing or vehicle rate of change of speed occurring. The side 43 incorporates a rewind spring (not shown) which applies light tension to the reel normally sufficient to rewind withdrawn webbing 45 back onto the reel when it is released by the seat occupant. The side 43 also incorporates a pyrotechnic pretensioner device comprising a cylinder 46 including a piston 47 which is slideable upwards when driven by the pressure of expanding gas therein following detonation of a pyrotechnic element (not shown). Such upward movement of the piston is then translated into rotation of the spool 44 via a cable and clutch mechanism in a webbing rewinding direction. Such a mechanism is in general well known, but in accordance with the present example of the invention, the retractor is also provided with a self sufficient electromechanical sensing and detonating device 48.

Referring to Fig. 6, the sensing device 48 comprises a housing 49 which if required, may be moulded of plastic integrally with one or other side covers of the retractor. The housing 49 includes a slideable mass 50 guided to be slideable parallel to the plane of the drawing in the direction of the arrow and is normally held against a stop 51 by the force of a calibration spring 56. The mass 50 is provided with an inner recess or aperture so as to embrace a micro-switch 52. The internal profile 53 of 50 being such as to normally hold the micro-switch plunger 54 depressed as in previously described embodiments to hold the micro-switch contacts open. However, leftward movement of 50 relative to the housing 49 due to rapid deceleration of the housing results in the plunger reading the profile 53 permitting lifting to close the switch contacts. Also mounted within the housing 48 is a long life lithium or other suitable voltaic cell 55, connected in series with the micro-switch to provide electrical detonation, via leads 16, to the pyrotechnic device (not shown) of the pretensioner (6, 7) when the circuit through switch 52 is so completed.

In an alternative construction as illustrated in Fig. 7, the voltaic cell 55 is itself mounted on the slideable sensing mass 50, thereby contributing to the inertial momentum thereof for sensing a predetermined rate of change of speed.

In operation, the retractor of Fig. 6 or 7 normally operates in a conventional manner sensing excessive rates of change of speed of pull out of the webbing or sensing predetermined rates of change of vehicle speed to lock the retractor reel. However such rates of change of vehicle speed are insufficient to cause significant movement of the mass 50 of the electromechanical sensing device 48. In the event of a higher rate of change of speed of the vehicle occurring indicative of the onset of a crash situation, the mass 50 moves against force of the calibration spring 56 allowing the micro-switch plunger 54 to lift and thereby closing the switch contacts to complete the circuit to the pyrotechnic device. Firing of the latter therefore tensions the belt webbing around the occupant.

In a modification of the sensing device of Fig. 6 or Fig. 7, the cam surface which engages the plunger 54 of the micro-switch may be an undulating surface as described above with reference to Fig. 4.

## Claims

1. A rate of speed change sensing device comprising a housing (6;12;22) within which an inertial mass (3;11;21) is movable against the force of a calibration spring (4;13;23) movement of said mass being effective to release a normally depressed plunger of a micro-switch (5;9;29) when a predetermined rate of change of speed is sustained, characterised in that said mass (11;21) is movably located in a guide channel within the housing (12;22) and said mass carries with it a cam surface which normally holds the plunger (9a;29a) of the micro-switch (9;29) depressed, the movement of said mass against the calibration spring in response to said predetermined rate of change of speed moving said cam surface (10a) transversely relative to said plunger (9a;29;).

2. A rate of speed change sensing device as claimed in claim 1, characterised in that said mass (21) is movable in two directions from a normal position in the housing movement in one said direction being against the force of said calibration spring (23) and movement in the other said direction being against the force of a further calibration spring (28) to release said normally depressed plunger (29a) of the micro-switch.

3. A rate of speed change sensing device as claimed in claim 1 or 2 characterised in that said housing comprises a tube (6;12;22).

4. A rate of speed change sensing device as claimed in any preceding claim, characterised in that said mass is slidable against said spring within a further tube in said housing and said further tube and said mass are slidable together in said housing against said further spring.

5. A rate of speed change sensing device as claimed in any preceding claim, characterised in that said housing includes an electric battery connectable to output leads in series with said micro-switch.

6. A rate of speed change sensing device as claimed in claim 6, characterised in that said electric battery forms part of said inertial mass.

## Patentansprüche

1. Vorrichtung zur Erfassung der Geschwindigkeitsänderungsrate, die ein Gehäuse (6; 12; 22) umfaßt, in dem eine träge Masse (3; 11; 21) gegen die Kraft einer Kalibrierfeder (4; 13; 23) beweglich ist, wobei die Bewegung der Masse dahingehend wirkt, einen normalerweise niedergedrückten Stößel eines Mikroschalters (5; 9; 29) freizugeben, wenn eine vorbestimmte Geschwindigkeitsänderungsrate beibehalten wird, dadurch gekennzeichnet, daß die Masse (11; 21) in einem Führungskanal in dem Gehäuse (12; 22) beweglich angeordnet ist und eine Kurvenfläche mitführt, die normalerweise den Stößel (9a; 29a) des Mikroschalters (9; 29) niedergedrückt hält, wobei die Kurvenfläche (10a) durch die Bewegung der Masse gegen die Kalibrierfeder als Reaktion auf die vorbestimmte Geschwindigkeitsänderungsrate quer zum Stößel (9a; 29) bewegt wird.

2. Vorrichtung zur Erfassung der Geschwindigkeitsänderungsrate nach Anspruch 1, dadurch gekennzeichnet, daß die Masse (21) aus einer normalen Position in dem Gehäuse in zwei Richtungen bewegt werden kann, wobei die Bewegung in die eine Richtung gegen die Kraft der Kalibrierfeder (23) verläuft und die Bewegung in die andere Richtung gegen die Kraft einer weiteren Kalibrierfeder (28) verläuft, um den normalerweise niedergedrückten Stößel (29a) des Mikroschalters freizugeben.

3. Vorrichtung zur Erfassung der Geschwindigkeitsänderungsrate nach Anspruch 1 oder 2, dadurch gekennzeichnet, daß das Gehäuse ein Rohr (6; 12; 22) umfaßt.

4. Vorrichtung zur Erfassung der Geschwindigkeitsänderungsrate nach einem der vorhergehenden Ansprüche, dadurch gekennzeichnet, daß die Masse gegen die Feder in einem weiteren Rohr in dem Gehäuse verschiebbar ist und das weitere Rohr und die Masse zusammen in dem Gehäuse gegen die weitere Feder verschiebbar sind.

5. Vorrichtung zur Erfassung der Geschwindigkeitsänderungsrate nach einem der vorhergehenden Ansprüche, dadurch gekennzeichnet, daß das Gehäuse eine in Reihe mit dem Mikroschalter an die Ausgangsleitungen anschließbare elektrische Batterie enthält.

6. Vorrichtung zur Erfassung der Geschwindigkeitsänderungsrate nach Anspruch 6, dadurch gekennzeichnet, daß die elektrische Batterie einen Teil der trägen Masse bildet.

## Revendications

1. Dispositif de détection d'un taux de changement de vitesse comprenant un boîtier (6;12;22) à l'intérieur duquel une masse d'inertie (3;11;21) peut se déplacer à l'encontre de la force d'un ressort de calibrage (4;13;23), le déplacement de ladite masse ayant pour effet de libérer un plongeur, normalement enfoncé, d'un microrupteur (5;9;29) lorsqu'un taux prédéterminé de changement de vitesse est maintenu, caractérisé en ce que ladite masse (11;21) est placée mobile dans un canal de guidage à l'intérieur du boîtier (12;22) et ladite masse porte sur elle une surface de came qui retient normalement le plongeur (9a, 29a) du microrupteur (9;29) enfoncé, le déplacement de ladite masse contre le ressort de calibrage en réponse audit taux prédéterminé de changement de vitesse déplaçant ladite surface de came (10a) transversalement par rapport audit plongeur (9a;29a).

2. Dispositif de détection d'un taux de changement de vitesse selon la revendication 1, caractérisé en ce que ladite masse (21) peut se déplacer dans deux directions depuis une position normale dans le boîtier, le déplacement dans une dite direction se faisant à l'encontre de la force dudit ressort de calibrage (23) et le déplacement dans l'autre dite direction se faisant à l'encontre de la force d'un ressort de calibrage supplémentaire (28) pour libérer ledit plongeur (29a), normalement enfoncé, du microrupteur.

3. Dispositif de détection d'un taux de changement de vitesse selon la revendication 1 ou 2, caractérisé en ce que ledit boîtier est constitué d'un tube (6;12;22).

4. Dispositif de détection d'un taux de changement de vitesse selon l'une quelconque des revendications précédentes, caractérisé en ce que ladite masse peut glisser contre ledit ressort à l'intérieur d'un tube supplémentaire dans ledit boîtier et ledit tube supplémentaire et ladite masse peuvent glisser ensemble dans ledit boîtier contre ledit ressort supplémentaire.

5. Dispositif de détection d'un taux de changement de vitesse selon l'une quelconque des revendications précédentes, caractérisé en ce que ledit boîtier comporte une pile électrique pouvant être connectée à des conducteurs de sortie en série avec ledit microrupteur.

6. Dispositif de détection d'un taux de changement de vitesse selon la revendication 5, caractérisé en ce que ladite pile électrique fait partie de ladite masse d'inertie.
